(19) Europäisches Patentamt
European Patent Office
Office européen des brevets

(11) **EP 4 769 311 A1**

(12) **EUROPEAN PATENT APPLICATION**

(43) Date of publication:
**01.07.2026 Bulletin 2026/27**

(21) Application number: **25188223.9**

(22) Date of filing: **08.07.2025**

(51) International Patent Classification (IPC):
**G06T 7/73** (2017.01)

(52) Cooperative Patent Classification (CPC):
**G06T 7/80;** G06T 7/73; G06T 2207/30196

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.12.2024 KR 20240196603**

(71) Applicant: **LG Electronics Inc.**
**Yeongdeungpo-gu**
**Seoul 07336 (KR)**

(72) Inventor: **HA, Jeongwon**
**07796 Seoul (KR)**

(74) Representative: **Vossius & Partner**
**Patentanwälte Rechtsanwälte mbB**
**Siebertstrasse 3**
**81675 München (DE)**

(54) **CAMERA CALIBRATION DEVICE AND METHOD FOR THE SAME**

(57)    A device for camera calibration that includes a memory storing code for the camera calibration; and a processor that executes the code for performing operations for the camera calibration.

FIG. 2

**Description**

**BACKGROUND OF THE INVENTION**

**Technical Field**

The present disclosure relates to a camera calibration device and method for the same, and more particularly, to a camera calibration device configured to obtain camera intrinsic parameters using multiple feature points in an obtained image and perform calibration using the parameters and method for the same.

**Discussion of the Related Art**

Camera calibration refers to a process of adjusting a camera such that the camera is capable of correctly capturing and interpreting images. This process involves correcting the lens distortion, color distortion, and geometric distortion of the camera to improve the accuracy of the images. The main objective is to accurately reproduce objects in the real world, which plays a crucial role in various fields such as computer vision, robotics, augmented reality, virtual reality, and autonomous vehicles.

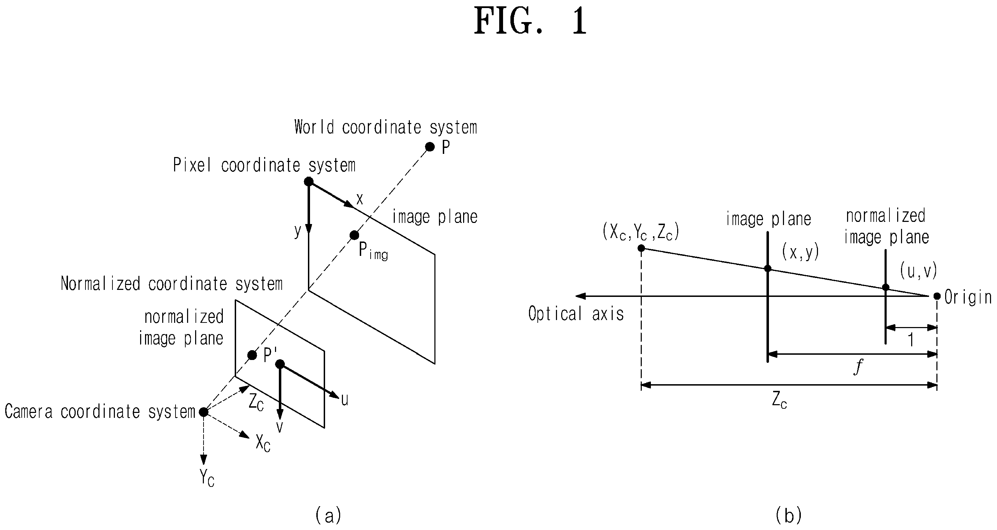

FIG. 1 illustrates a pinhole camera model for explaining camera calibration.

Referring to FIG. 1, a total of four coordinate systems are shown: a camera coordinate system, a normalized coordinate system, a pixel coordinate system, and a world coordinate system, each illustrated starting from the lower right.

The world coordinate system and the camera coordinate system are 3D coordinate systems, while the normalized coordinate system and the pixel coordinate system are 2D coordinate systems. The world coordinate system is a reference system used to express the position of objects, while the camera coordinate system is a reference system based on the camera. The pixel coordinate system, also referred to as an image coordinate system, is a coordinate system for images that are actually visible to the eye. The pixel coordinate system corresponds to an image plane with the origin at the top-left corner, extending to the right and downward.

A point P = (X, Y, Z) in a 3D space is projected onto a point pimg = (x, y) on the image plane through the focal point of the camera or lens.

The normalized coordinate system corresponds to an image coordinate system where the influence of the intrinsic parameters of the camera is removed. The normalized coordinate system is a unit-less (normalized) coordinate system and defines an imaginary image plane with a distance of 1 from the focal point of the camera. A point on the normalized coordinate system is defined as P' = (u, v). Therefore, if the intrinsic parameters of the camera are known, transformation between image (pixel) coordinates and normalized coordinates becomes possible.

[Equation 1]

$$\begin{bmatrix} x \\ y \\ 1 \end{bmatrix} = \begin{bmatrix} f_x & 0 & c_x \\ 0 & f_y & c_y \\ 0 & 0 & 1 \end{bmatrix} \begin{bmatrix} u \\ v \\ 1 \end{bmatrix}$$

In Equation 1, fx is a focal length in the horizontal direction, fy is a focal length in the vertical direction, and cx and cy are a principal point, which represents image (pixel) coordinates where an optical axis intersects the image (pixel) plane.

A rotation and translation transformation matrix ([R | t]) for transforming the world coordinate system to the camera coordinate system is modeled, which may be represented as follows.

[Equation 2]

$$\begin{bmatrix} Xc \\ Yc \\ Zc \end{bmatrix} = [R \mid t] \begin{bmatrix} X \\ Y \\ Z \\ 1 \end{bmatrix}$$

Mathematically, camera calibration is a process of finding a transformation relationship between 3D spatial coordinates and 2D image coordinates or parameters that describe the transformation relationship.

The matrix in Equation 1 is referred to as intrinsic parameters, while the matrix [R | t] in Equation 2 is referred to as extrinsic parameters.

When using a wide-angle or ultra-wide-angle lens with a large field of view, a broader range may be captured, but this results in relatively more significant image distortion.

Such image distortion becomes particularly problematic not only as a visual issue but also when precise numerical calculations are required through image analysis. For example, if image coordinates are transformed into physical coordinates to determine the actual position of an object detected from an image, significant errors may occur depending on the degree of image distortion.

Camera distortion, that is, lens distortion includes radial distortion and tangential distortion.

If there is no lens distortion, a point (Xc, Yc, Zc) in a 3D space is projected onto a point (x_n_u, y_n_u) on a normalized image plane through central projection.

[Equation 3]

$$\begin{bmatrix} x_{n\_u} \\ y_{n\_u} \end{bmatrix} = \begin{bmatrix} X_c / Z_c \\ Y_c / Z_c \end{bmatrix}$$

If normalized coordinates with lens distortion reflected are expressed as (x_n_d, y_n_d), a lens distortion model may be represented as follows.

[Equation 4]

$$\begin{bmatrix} x_{n\_d} \\ y_{n\_d} \end{bmatrix} = (1 + k_1 r_u^2 + k_2 r_u^4 + k_3 r_u^6) \begin{bmatrix} x_{n\_u} \\ y_{n\_u} \end{bmatrix} + \begin{bmatrix} 2 p_1 x_{n\_u} y_{n\_u} + p_2 (r_u^2 + 2 x_{n\_u}^2) \\ p_1 (r_u^2 + 2 y_{n\_u}^2) + 2 p_2 x_{n\_u} y_{n\_u} \end{bmatrix}$$

In Equation 4, $r_u^2 = x_{n\_u}^2 + y_{n\_u}^2$ .

In Equation 4, the first term on the right-hand side represents radial distortion, and the second term represents tangential distortion. K1, K2, K3 are radial distortion coefficients, p1, p2 are tangential distortion coefficients, and r_u is a distance (radius) from the center (principal point) when there is no distortion.

Using the intrinsic parameters from Equation 1, the normalized coordinates with the lens distortion reflected may be expressed as image pixel coordinates (x_p_d, y_p_d).

[Equation 5]

$$\begin{bmatrix} x_{p\_d} \\ y_{p\_d} \\ 1 \end{bmatrix} = \begin{bmatrix} f_x & \text{skew\_c} f_x & c_x \\ 0 & f_y & c_y \\ 0 & 0 & 1 \end{bmatrix} \begin{bmatrix} x_{n\_d} \\ y_{n\_d} \\ 1 \end{bmatrix}$$

In Equation 5, skew_c$f_x$ is an asymmetry coefficient, which is typically set to 0 (i.e., omitted).

In other words, coordinates on the normalized image plane may be transformed into coordinates on an image plane with distortion reflected.

Through such a relationship, correction of image distortion or correction of distortion in image coordinates may be performed. The correction of distortion in image coordinates will be explained below.

In actual image processing, it may be significantly more important to obtain corrected image coordinates rather than obtaining a corrected image.

However, obtaining corrected image coordinates from distorted image coordinates is a challenging problem without a closed-form solution, and thus, a solution is usually approximated.

One method to find corrected image coordinates p_u from distorted image coordinates p_d is to assume p_u = p_d and use Equation 4 to distort p_u. Then, an error between the distorted point and the actual p_d is calculated, and the error is inversely applied to p_u. For example, if the distorted point from p_u is $\delta$ larger than p_d, p_u is reduced by $\delta$. This process is repeated until the error is smaller than a threshold.

In conclusion, camera calibration or camera distortion correction uses pairs of image (pixel) coordinates and 3D coordinates (i.e., world coordinates) corresponding thereto to calculate the intrinsic parameters or extrinsic parameters. Based on the parameters, the distortion of the image coordinates may be corrected.

Although camera calibration and camera distortion correction has been explained in brief, many materials have been disclosed prior to the filing of this application, and the materials may be referenced.

Conventional camera calibration uses images captured with a chessboard or 3D jig structure placed at a close distance along with the known 3D coordinates of intersections on the chessboard and image coordinates corresponding thereto.

The present disclosure aims to propose a calibration method for the intrinsic parameters of a camera without using known information such as a chessboard.

## SUMMARY OF THE INVENTION

Accordingly, the present disclosure is directed to a camera calibration device and method for the same that substantially obviate one or more problems due to limitations and disadvantages of the related art.

An object of the present disclosure is to provide a calibration method for camera intrinsic parameters.

It will be appreciated by people skilled in the art that the objects that could be achieved with the present disclosure are not limited to what has been particularly described hereinabove and the above and other objects that the present disclosure could achieve will be more clearly understood from the following detailed description.

To achieve these objects and other advantages and in accordance with the purpose of the disclosure, as embodied and broadly described herein, provided is a camera calibration device. The device may include: a memory configured to store code for camera calibration; and a processor configured to execute the code for performing operations for the camera calibration.

Additionally or alternatively, the operations for the camera calibration may include obtaining a two-dimensional position estimate for at least one pair of points of an object from an obtained image.

Additionally or alternatively, the operations for the camera calibration may include obtaining a three-dimensional position estimate for the pair of points;

Additionally or alternatively, the operations for the camera calibration may include obtaining two-dimensional transformation information for the obtained three-dimensional position estimate.

Additionally or alternatively, the operations for the camera calibration may include calculating an error between the two-dimensional transformation information and the two-dimensional position estimate.

Additionally or alternatively, the operations for the camera calibration may include adjusting parameters for the camera calibration or deciding the parameters for the camera calibration as final parameters based on the error.

Additionally or alternatively, the three-dimensional position estimate may be obtained based on the two-dimensional position estimate and the parameters for the camera calibration.

Additionally or alternatively, initial values of the parameters for the camera calibration may be used, and the initial values may include a focal point value corresponding to a product of a width of the obtained image and a predetermined value and/or a principal point corresponding to a center of the obtained image.

Additionally or alternatively, the operations for the camera calibration may include adjusting the parameters for the camera calibration based on the error being greater than a threshold.

Additionally or alternatively, the operations for the camera calibration may include deciding the parameters for the camera calibration as the final parameters based on the error being smaller than a threshold.

Additionally or alternatively, the operations for the camera calibration may include calculating the error by comparing a distance between points of the pair of points or a position of the pair of points for the two-dimensional transformation information and the two-dimensional position estimate.

Additionally or alternatively, the operations for the camera calibration may include outputting a user interface for guiding a posture for the object on a display based on inability or difficulty in obtaining the two-dimensional position estimate for the pair of points.

Additionally or alternatively, the operations for the camera calibration may include re-executing the code for the camera calibration based on detecting a connection with a new camera.

Additionally or alternatively, the operations for the camera calibration may include executing the code for the camera calibration at a plurality of discrete zoom levels within a zoom level range supported by a camera.

Additionally or alternatively, the operations for the camera calibration may include deciding the final parameters by executing the code for the camera calibration on a predetermined number of images.

In another aspect of the present disclosure, provided herein is a method for camera calibration. The method may be performed by a camera calibration device.

Additionally or alternatively, the method may include obtaining a two-dimensional position estimate for at least one pair of points of an object from an obtained image.

Additionally or alternatively, the method may include obtaining a three-dimensional position estimate for the pair of points.

Additionally or alternatively, the method may include obtaining two-dimensional transformation information for the obtained three-dimensional position estimate.

Additionally or alternatively, the method may include calculating an error between the two-dimensional transformation information and the two-dimensional position estimate.

Additionally or alternatively, the method may include adjusting parameters for the camera calibration or deciding the parameters for the camera calibration as final parameters based on the error.

In another aspect of the present disclosure, provided herein is a computer-readable medium storing code configured to be executed by a computer or processor that performs the method for the camera calibration mentioned above.

In a further aspect of the present disclosure, provided herein is a computer-readable medium storing code configured to be executed by a computer or processor that performs operations for camera calibration. The operations may include: outputting a user interface for guiding a posture for a user on a display to obtain a user image; obtaining at least one pair of points corresponding to the user from the obtained user image; determining parameters for the camera calibration based on the least one pair of points; and outputting three-dimensional position estimation results or two-dimensional transformation information based on the three-dimensional position estimation results, based on the pair of points and the determined parameters.

It will be understood by those skilled in the art that the above-described aspects of the present disclosure are merely part of various embodiments of the present disclosure, and various modifications and alternatives could be developed from the following technical features of the present disclosure.

The present disclosure has the following effects.

According to the present disclosure, camera parameters may be calibrated or updated to values close to actual values. Additionally, the pose or location of an object may be precisely estimated based on the calibrated or updated camera parameters.

According to the present disclosure, camera parameter acquisition and object pose or location estimation may be performed using obtained parameters, without depending on objects other than a target object.

The effects according to the present disclosure are not limited to what has been particularly described hereinabove, and any other effects not mentioned may be clearly understood by those skilled in the art to which the present disclosure pertains from the following detailed description.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 illustrates a pinhole camera model for explaining camera calibration;
FIG. 2 illustrates a flowchart of a method for camera calibration according to the present disclosure;
FIGS. 3(a) - 3(c) illustrate results of projecting a joint position estimate for an object based on camera intrinsic parameters obtained through camera calibration onto a captured image;
FIGS. 4(a) - 4(b) illustrates an environment for camera calibration with an object in the background and an environment for camera calibration without an object in the background;
FIGS. 5 and FIGS. 6(a) - 6(b) illustrate examples of user scenarios for camera calibration according to the present disclosure;
FIGS. 7(a) - 7(b) illustrate a second user scenario example for camera calibration according to the present disclosure;
FIGS. 8(a) - 8(c) illustrate a third user scenario example for camera calibration according to the present disclosure;
FIG. 9 illustrates a fourth user scenario example for camera calibration according to the present disclosure;
FIGS. 10(a) - 10(b) illustrate a fifth user scenario example for camera calibration according to the present disclosure;
FIGS. 11(a) - 11(c) illustrate a sixth user scenario example for camera calibration according to the present disclosure;
FIGS. 12(a) - 12(b) illustrate a seventh user scenario example for camera calibration according to the present disclosure;

FIGS. 13(a) - 13(b) illustrate an image of an object (user) in a specific posture and three-dimensional joint position estimation results of the object (user) derived from the image;

FIGS. 14(a) - 14(b) are diagrams for comparing three-dimensional estimation results obtained based on initial camera intrinsic parameters and three-dimensional estimation results obtained based on camera intrinsic parameters adjusted by camera calibration according to the present disclosure;

FIGS. 15(a) - 15(d) are diagrams for comparing three-dimensional estimation results obtained based on actual camera intrinsic parameters and initial camera intrinsic parameters and three-dimensional estimation results obtained based on camera intrinsic parameters adjusted through camera calibration according to the present disclosure; and

FIG. 16 illustrates a block diagram of a camera calibration device according to the present disclosure.

## DETAILED DESCRIPTION

Hereinafter, embodiments of the present disclosure will be described in detail with reference to the attached drawings. In this specification, the same or equivalent components will be provided with the same reference numbers, and description thereof will not be repeated. The suffixes "module" and "unit" used for the components in the following description are assigned or used for convenience of description, and do not inherently have distinct meanings or roles. The suffixes are employed solely for ease of reference and should not be considered to convey unique distinctions in meaning or function. If it is deemed that detailed descriptions of the related art obscure the gist of the embodiments disclosed in this specification, the detailed descriptions will be omitted. It should be understood that the attached drawings are merely to provide better understanding of the embodiments disclosed herein and the technical concepts of the present disclosure are not limited to the attached drawings. Thus, the present disclosure should be construed to encompass all alterations, equivalents, and alternatives within the scope of the concepts and technologies disclosed in the present disclosure.

While terms such as "first," "second," and so on may be used to describe various components, but the aforementioned components are not limited by these terms. The above terms are used only to distinguish one component from another.

When a component is mentioned to be "connected" or "coupled" to another component, it may be directly connected or coupled to the other component, but it should be understood that there could also be other components in between. On the other hand, when a component is mentioned to be "directly connected" or "directly coupled" to another component, it should be understood that there are no other components in between.

Unless singular expressions clearly indicate otherwise in context, the singular expressions encompass plural expressions.

In the present disclosure, terms such as "comprises" or "includes" are intended to indicate the presence of features, numbers, steps, operations, components, parts, or combinations thereof as specified in the specification, rather than to preclude the presence or possibility of one or more other features, numbers, steps, operations, components, parts, or combinations thereof.

Camera intrinsic parameters represent a relationship that transforms the two-dimensional coordinates of an image into three-dimensional coordinates, and camera calibration refers to a process of estimating the camera intrinsic parameters.

The camera intrinsic parameters include a focal length, a principal point, and values representing distortion.

The focal length is expressed in pixels as the distance between a lens and an image sensor, and the principal point distance is assumed to be zero in the present disclosure by assuming that there is no distortion between the lens and the image sensor.

In the above-described method using a checkerboard, there was the inconvenience of having to take and prepare more than 20 pictures of the checkerboard. For this reason, methods using vanishing points recognized in images rather than a checkerboard have been proposed. However, there is a constraint that a vanishing point needs to be recognized in the surroundings of a user, and it may not be guaranteed that the vanishing point exists in an actual shooting space. Accordingly, the present disclosure proposes a method of estimating camera intrinsic parameters that provides convenience to the user and is applicable in various environments. According to the present disclosure, from the perspective of the user, it is sufficient to ensure that the full body of the user is captured through the camera in order to estimate the camera intrinsic parameters.

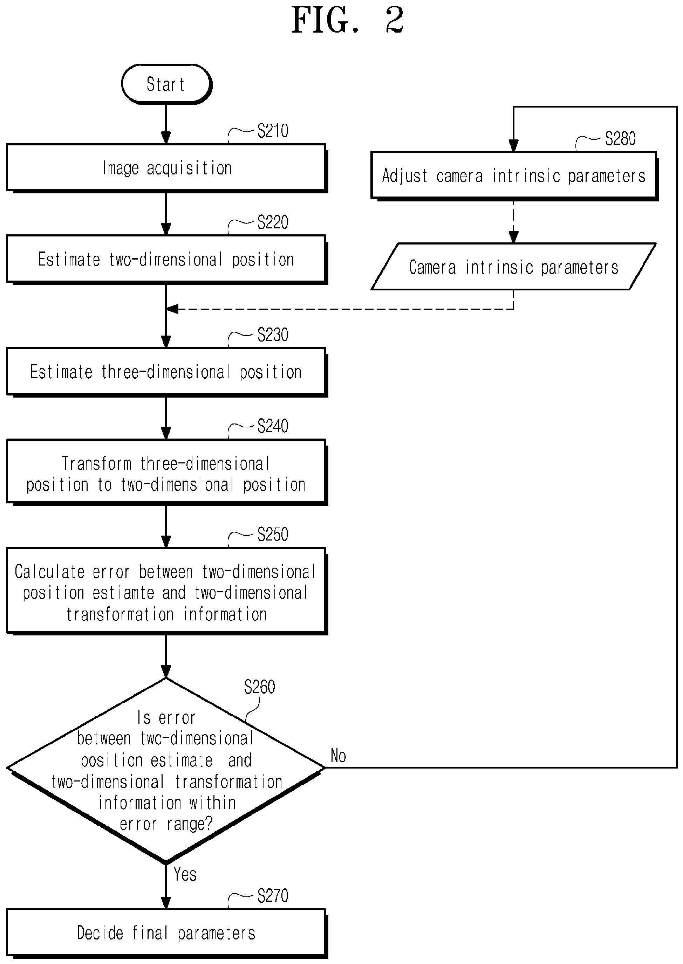

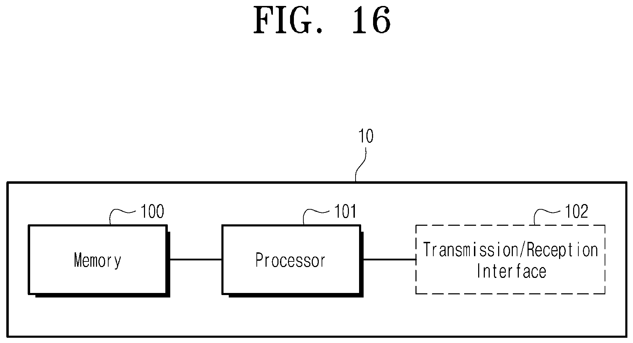

FIG. 2 illustrates a flowchart of a method for camera calibration according to the present disclosure. The method for camera calibration depicted in FIG. 2 may be performed by a camera calibration device or a processor thereof, or the method may be implemented by execution of code configured to perform the operations according to the method by the device or processor. Hereinafter, operations are simply described as being performed by a camera calibration device (10) (simply referred to as the device (10)), and further details about the camera calibration device (10) will be provided with reference to FIG. 16.

The device (10) may be configured to obtain an image obtained by capturing an object (S210). The image may be captured through the camera.

The device (10) may be configured to estimate a two-dimensional position of the object from the obtained image (S220). Estimating the two-dimensional position of the object may include estimating the two-dimensional position for at least one pair of points of the object.

As an example, when using two pairs of points, the position of a joint of an object may be set as a single point. A first pair of points consisting of two points corresponding to connected joints may be configured, and a second pair of points consisting of two points corresponding to other connected joints may be configured. Preferably, one of two pairs of points is arranged along the vertical axis on the image, and the other pair is arranged along the horizontal axis on the image. Since the focal length among the camera intrinsic parameters exists separately for the horizontal direction (x-axis) and the vertical direction (y-axis), the focal length may be measured or calibrated in the horizontal direction (x-axis) and the vertical direction (y-axis).

The device (10) may be configured to obtain the two-dimensional coordinate values of at least one pair of points.

Estimating the two-dimensional position of a specific part of an object from an image is important in computer vision, and the estimation may be used in applications such as behavior analysis, augmented reality/virtual reality, and robot control. Hereinafter, a general overview of estimating the two-dimensional position of a specific part of an object from an image will be briefly explained. The present disclosure may use this method but is not limited thereto.

There are two methodologies for accurately estimating the two-dimensional coordinates of a specific part of an object from an image: a feature-based approach and a deep learning-based approach. The feature-based approach detects and analyzes features capable of distinguishing specific parts of an object in an image. Feature detection includes algorithms such as Scale-Invariant Feature Transform (SIFT), Speeded-Up Robust Features (SURF), and Oriented FAST and Rotated BRIEF (ORB) to find specific patterns. Alternatively, the feature detection may include comparing an image with a predefined template to estimate a specific part or using the structural relationships of an object to accurately estimate the part.

Deep learning automatically extracts specific parts and predicts the coordinates through data and training. For deep learning, a keypoint detection network using CNNs (Convolutional Neural Networks) to directly predict the coordinates of an area of interest in an image may be used. A heatmap-based estimation where a network generates a heatmap (probability distributions) for each part of an image and converts the maximum value location of the heatmap into the coordinates of a specific part may be used. Additionally, an approach where an object is detected (e.g., YOLO, Faster R-CNN) and then a keypoint is found may be used.

Through the processes of data preparation, preprocessing, model training, and inference, two-dimensional positions may be estimated and predicted.

Additionally, a process for estimating or recognizing the position of a joint of an object from an image is called pose estimation, which is also widely used in computer vision. Joint position estimation uses a method that is almost identical to the method described earlier for estimating the two-dimensional position of a specific part of an object.

The device (10) may be configured to estimate a three-dimensional position for at least one pair of points, which are the subject of the obtained two-dimensional position (S230). To estimate the three-dimensional position, the camera intrinsic parameters and the previously obtained two-dimensional position may be used.

Hereinafter, a general overview of three-dimensional position estimation based on two-dimensional position estimation from an image will be explained. The present disclosure may use this method but is not limited thereto.

A process of estimating a three-dimensional position based on two-dimensional position estimation uses two-dimensional information from an image along with additional information (such as camera characteristics or prior knowledge) to obtain three-dimensional position information.

Estimating the three-dimensional position from the two-dimensional position is performed as follows. Broadly, a method of using a single image and a method of using multiple images are used.

If there is no additional information, depth information may not be determined. Thus, estimating three-dimensional position information (i.e., coordinates) from a single image may be inaccurate. To address this issue, depth may be estimated based on prior knowledge of the actual size or shape of specific objects. For example, a checkerboard may be used for camera calibration. Alternatively, three-dimensional position information may be estimated based on data learned through deep learning models.

Additionally, the method of using multiple images performs three-dimensional position estimation using two or more camera images. Based on images of the same object obtained from two cameras, two-dimensional position information on the object is matched. The final three-dimensional position information can be estimated by obtaining depth information through triangulation,

As another method, a single image and depth sensor measurements may also be used. By combining an RGB camera with a depth sensor to directly measure depth information, a three-dimensional position estimate may be obtained from a two-dimensional position estimate.

For initial three-dimensional position estimation, the initial values of camera intrinsic parameters may be used. The initial values of the camera intrinsic parameters may include a focal value corresponding to the product of the width of an obtained image and a predetermined value and/or a principal point corresponding to the center of the obtained image.

The device (10) may be configured to obtain two-dimensional transformation information from the obtained three-dimensional position estimate (S240). This is for obtaining information for comparison with the two-dimensional estimation information obtained in S220. The comparison of the obtained two-dimensional estimation information and the obtained two-dimensional transformation information is to ultimately assess how appropriate the camera intrinsic parameters used for the three-dimensional position estimation are or how closely the camera intrinsic parameters match the actual camera intrinsic parameters.

To obtain the two-dimensional transformation information from the obtained two-dimensional position estimate, a transformation relationship (e.g., a transformation matrix) may be used. The transformation relationship or transformation matrix may have an inverse relationship with a transformation relationship (e.g., transformation matrix) used to obtain the three-dimensional position estimate in S230.

Alternatively, the two-dimensional transformation information may represent information obtained by simply projecting the obtained three-dimensional position estimate onto a two-dimensional plane. However, the present disclosure is not limited thereto. For example, the projection onto the two-dimensional plane involves setting a value on the z-axis to a specific value, such as 0, when the obtained three-dimensional position estimate is represented in a three-dimensional coordinate system, such as $(x1, y1, z1)$.

The device (10) may be configured to calculate or obtain an error between the obtained two-dimensional estimation information and the obtained two-dimensional transformation information (S250). The error may be calculated or obtained based on the distance between the points of at least one pair of points that forms the basis of the two-dimensional estimation information or based on the location of the at least one pair of points.

For example, when the obtained two-dimensional estimation information is A and B (where A and B represent points), and when the obtained two-dimensional transformation information is A' and B' (where A' and B' represent points), the following differences may be calculated or obtained: the difference in the distance between A and B and A' and B'; the difference in the positions of A and A' (i.e., difference in two-dimensional coordinate values); or the difference in the positions of B and B' (i.e., difference in two-dimensional coordinate values).

The device (10) may be configured to determine whether the two pieces of information are within an error range (S260). The error range may be preconfigured.

Accordingly, if the difference calculated or obtained in S250 is less than or equal to the error, the device (10) may be configured to decide the camera intrinsic parameters used for the three-dimensional position estimation in S230 as final camera intrinsic parameters (S270).

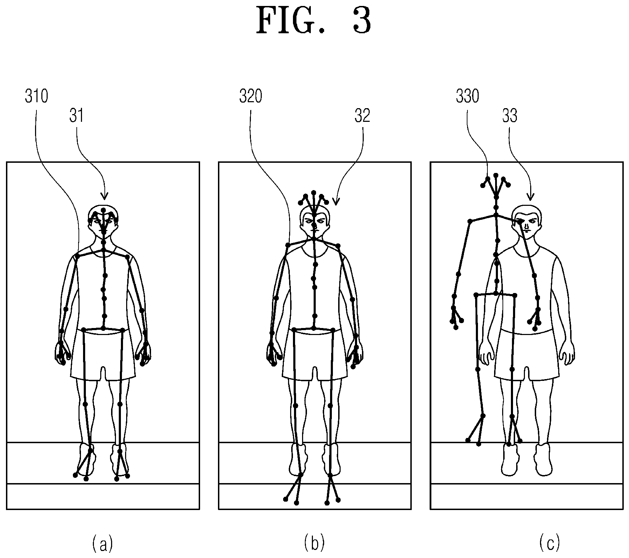

If the difference calculated or obtained in S250 is greater than the error, the device (10) may be configured to adjust (or update) the camera intrinsic parameters used for the three-dimensional position estimation in S230 (S280). Accordingly, when performing the three-dimensional position estimation (S230), the device (10) may be configured to use the adjusted (or updated) camera intrinsic parameters. The adjustment or update of the camera intrinsic parameters will be explained later with reference to FIGS. 3(a) - 3(c).

Although FIG. 2 shows the re-execution of S230 using the adjusted camera intrinsic parameters, it may also be modified to an embodiment where a procedure of obtaining an image of the object (S210) is re-executed.

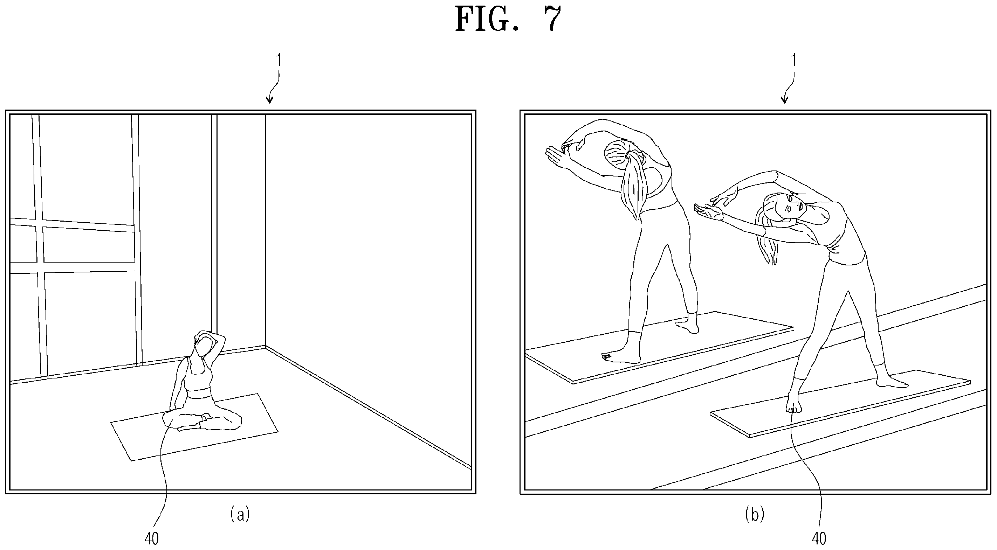

In S220, it may be difficult or impossible to obtain the two-dimensional position estimate for at least one pair of points of the object. That is, the pose or appearance of the object in the obtained image may be in a state where it is difficult to estimate or obtain the position of a pair of points. Since among the camera intrinsic parameters, the focal length exists separately for the horizontal direction (x-axis) and the vertical direction (y-axis), at least one pair of points is used to measure or calibrate at least one of the focal lengths in the horizontal direction (x-axis) and the vertical direction (y-axis). Therefore, in cases where it is difficult to estimate or obtain the position of at least one pair of points due to the pose or appearance of the object, the device (10) may be configured to output a graphical interface for pose guidance of the object to a human-machine interface, such as a display. Details thereof will be provided with reference to FIG. 7.

The method for camera calibration described with reference to FIG. 2 is an operation for estimating the characteristics of the camera (i.e., intrinsic parameters), and thus, the method needs to be performed individually for each camera. For example, in a scenario where a camera (e.g., webcam) is connected and mounted on a display device, such as a TV, the camera calibration according to FIG. 2 may be performed for a first camera and used. However, if the first camera is removed and a second camera is connected and mounted, the camera calibration according to FIG. 2 needs to be performed again. Therefore, the device (10) may be configured to perform the camera calibration again upon detecting a connection with a new camera.

Additionally, the method for camera calibration described with reference to FIG. 2 is an operation for estimating the characteristics of the camera (i.e., intrinsic parameters), and thus, the method needs to be performed individually for each zoom level of the camera. For example, if the camera supports optical zoom or digital zoom in the range of 1.0x to 3.0x, the device (10) may be configured to perform the camera calibration according to FIG. 2 within a zoom level range supported by the camera. In other words, the device (10) may be configured to perform the camera calibration at each of the multiple discrete zoom levels within the zoom level range supported by the camera.

Additionally, the camera calibration may be performed on multiple images. That is, the camera calibration according to FIG. 2 may be repeated multiple times for a single camera. Specifically, the camera calibration may be repeated a preconfigured number of times. Moreover, multiple camera calibrations may be performed on different images. For example, a preconfigured number of images, captured continuously or non-continuously, may be obtained (S210), and the camera calibration of FIG. 2 may be performed sequentially for the images.

FIGS. 3(a) - 3(c) illustrate results of projecting a joint position estimate for an object based on camera intrinsic parameters obtained through camera calibration onto a captured image.

In FIGS. 3(a) - 3(c), 310, 320, and 330 represent the results of projecting the three-dimensional position estimates of objects 31, 32, and 33 onto a two-dimensional image. The closer the two-dimensional projection value of the three-dimensional position estimate aligns with the object on the image, the more accurate the estimation results are. That is, FIG. 3(a) represents the state where the estimation results are most accurate.

FIG. 3(b) shows estimation results when a focal length among the camera intrinsic parameters used for the estimation differs from the focal length of actual camera intrinsic parameters. In this case, it may be observed that the distance between points (i.e., joints) is different from the actual distance.

FIG. 3(c) shows estimation results when a principal point among the camera intrinsic parameters used for the estimation differs from the principal point of the actual camera intrinsic parameters. In this case, it may be observed that the position of a feature point in the estimation results differ from the actual joint position of the object.

When three-dimensional position information is projected onto a two-dimensional plane (or two-dimensional image), if the distance between two points is larger or smaller than that in two-dimensional position estimation results (or the object in the image), the focal length needs to be adjusted. If the distance between two points appears as a translation on the two-dimensional plane compared to the two-dimensional position estimation results (or the object on the image), the principal point position needs to be adjusted.

Therefore, the device (10) may proceed with the following process to adjust the focal length and principal point.

1. The device (10) acquires the distance between two points (e.g., shoulder length, distance from foot to pelvis, or other joint distances) from transformation information obtained by projecting the three-dimensional position information onto the two-dimensional plane. The device (10) then adjusts the focal length by comparing the obtained distance with the distance between the two points in the two-dimensional position estimation results (or the object in the image).
2. The device (10) obtains the positions of two points from transformation information obtained by projecting the three-dimensional position information onto the two-dimensional plane. The device (10) then calculates the difference in position (along the horizontal or vertical axis) between the corresponding two points in the two-dimensional position estimation results (or the object in the image) and adjusts the principal point accordingly.

The device (10) may use the differences in distance or position between the two points that may be obtained from i) the two-dimensional position estimate and ii) the information obtained by transforming the three-dimensional position estimate into two dimensions, in order to obtain information about the principal point and focal length among the camera intrinsic parameters.

When the focal length changes, the size (scale) of the object appears differently when the three-dimensional position estimate is projected onto the two-dimensional plane. Based on this characteristic, the device (10) may obtain the ratio of the distance between the two points from the two-dimensional position estimate and the information obtained by transforming the three-dimensional position estimate into two dimensions and use the ratio to adjust the focal length.

More specifically, when the device (10) adjusts or acquires the focal length in the horizontal direction (x-axis), the device (10) uses joints that appear aligned along the x-axis (for example, the left and right pelvis joints, or the left and right shoulder joints). In the same way, to adjust or obtain the focal length in the vertical direction (y-axis), the device (10) uses joints that appear aligned along the y-axis (for example, the center of the pelvis to the head, or the pelvis to the ankle).

Therefore, the device (10) may be configured to adjust the focal length of the camera used for the three-dimensional position estimation such that the distance between two points in the information obtained by transforming the three-dimensional position estimate into two dimensions converges (or is adjusted within the error range) to the distance between two points in the two-dimensional position estimate.

Additionally, when the principal point changes, the position of the object appears differently when the three-dimensional position estimate is projected onto the two-dimensional plane. Based on this characteristic, the device (10) may obtain information on the positions of the two points from the two-dimensional position estimate and the information obtained by transforming the three-dimensional position estimate into two dimensions, and use the obtained information to adjust the principal point.

More specifically, to obtain an x-axis principal point and an y-axis principal point, the device (10) uses the coordinates of joints that appear aligned along the y-axis for the x-axis principal point, and the coordinates of the joints that appear aligned along the x-axis for the y-axis principal point.

Therefore, the device (10) may be configured to adjust the principal point of the camera used for the three-dimensional position estimation such that information on the positions (i.e., coordinates) of two points in the information obtained by transforming the three-dimensional position estimate into two dimensions converges (or is adjusted within the error range) to information on the positions of the two points in the two-dimensional position estimate.

The combination of points used for adjustment (i.e., a pair of points composed of two points, such as joints) may be variable, and there is no restriction that requires the use of a specific pair of points. Additionally, the overall positional difference between pair of points (e.g., the distance between the pelvis joints or the average difference in the positions of multiple joints) may be used.

The device (10) uses the adjusted camera intrinsic parameters again for the three-dimensional position estimation. The device (10 may be configured to repeat the above process until the difference or error between i) the two-dimensional position estimate and ii) the information obtained by transforming the three-dimensional position estimate into two dimensions becomes smaller than a threshold. As a result, the device (10) may be configured to obtain the final camera intrinsic parameters.

The final camera intrinsic parameters are stored in the memory of the device (10), and the final camera intrinsic parameters may be reused when the same camera is used again. When the camera is changed, or when the camera is powered on, the device (10) may perform the above process (i.e., calibration) again.

Hereinabove, the process of adjusting the focal length and principal point among the camera intrinsic parameters has been described. However, the device (10) according to the present disclosure may perform the camera calibration process by adjusting either the focal length or the principal point. Additionally, it has been explained that the focal length among the camera intrinsic parameters is adjusted for both the horizontal and vertical focal lengths. However, the device (10) according to the present disclosure may perform the camera calibration process by adjusting either the horizontal focal length or the vertical focal length.

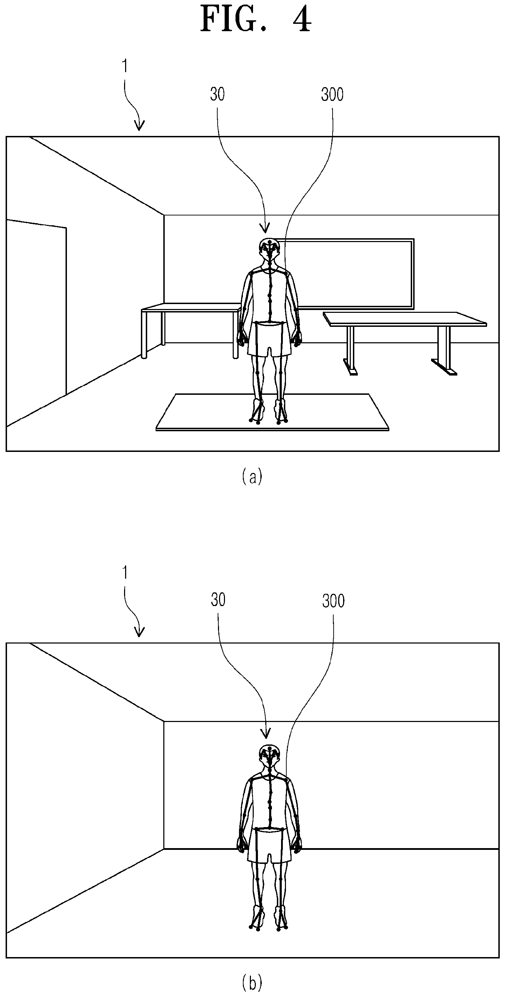

FIGS. 4(a) - 4(b) an environment for camera calibration with an object in the background and an environment for camera calibration without an object in the background.

FIG. 4(a) shows a scenario where there are objects around a user (30), and FIG. 4(b) shows a scenario where there are no objects around the user (30).

In the prior art, camera calibration has been performed by capturing the images of objects with known sizes or lengths, such as a checkerboard and using the images.

As explained above with reference to FIG. 2, camera calibration is performed using at least one pair of points of an object. Therefore, when there are no objects around the user (30) as shown in FIG. 4(b), camera parameters may be adjusted or estimated based on the image of the user (30).

In other words, according to the present disclosure, only images related to the user (30) may be used to adjust and estimate the camera parameters used for capturing the corresponding images. Thus, the camera calibration method according to FIG. 2 may be performed not only when there are objects around the user (30) or object as shown in FIG. 4 (a), but also when there are no objects around the user (30) or object as shown in FIG. 4(b).

When there are no objects around as shown in FIG. 4 (b), a device (10) or a processor of the device may perform the following operations. The processor may be configured to:

- Output a user interface for pose guidance on a display to obtain an image of the user,
- Acquire at least one pair of points corresponding to the user from the obtained user image,
- Use the obtained at least one pair of points to determine parameters for camera calibration, and
- Based on the obtained at least one pair of points and the determined camera calibration parameters, output a three-dimensional position estimation result or two-dimensional transformation information based on the three-dimensional position estimation result.

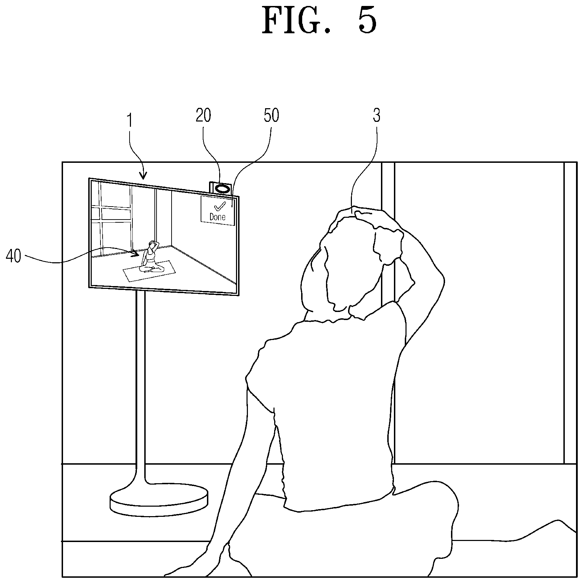

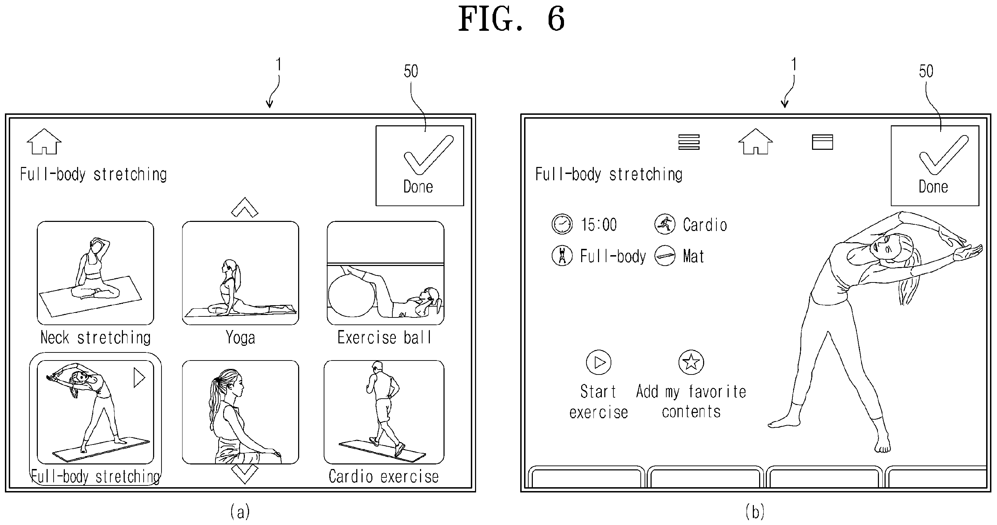

FIGS. 5 and 6 illustrate examples of user scenarios for camera calibration according to the present disclosure.

Camera calibration according to the present disclosure may be performed by capturing a user (3) using a camera (20) and utilizing the captured image.

Therefore, as shown in FIG. 5, a display device (1) may output guide content for the user (3) and guide the user (3) to follow the actions of a coach (40). While the user (3) is following the actions of the coach (40), the camera calibration method according to the present disclosure, which is explained with reference to FIG. 2, may be performed. In this case, the display device (1) may include a camera calibration device (10) or be integrated with the camera calibration device (10).

Once the camera calibration method according to the present disclosure is completed, the display device (1) may be configured to output a user interface (50) on a display to inform that the camera calibration or adjustment of the camera intrinsic parameters is completed.

The output of the guide content on the display device (1) according to FIG. 5 may include the output of warm-up exercise content in a fitness application or service. In other words, while outputting the warm-up exercise content, the display device (1) may be configured to obtain the image of the user (3) and execute the camera calibration method as shown in FIG. 2.

FIGS. 6(a) - 6(b) illustrate an example of a scene where a display device (1) is capable of outputting after outputting the warm-up exercise video shown in FIG. 5.

FIG. 6(a) shows a list of various fitness guide content for a user (3), and FIG. 6(b) shows recommended fitness guide content for the user (3). A display device (1) or a camera calibration device (10) may be configured to output fitness guide content based on any one of the weather, the time, or the condition status of the user (3).

As shown in FIGS. 6(a) - 6(b), the display device (1) or the camera calibration device (10) may be configured to output a user interface (50) on a display to inform that camera calibration or adjustment of camera intrinsic parameters is completed.

FIGS. 7(a) - 7(b) illustrate a second user scenario example for camera calibration according to the present disclosure.

The camera calibration according to the present disclosure may be performed by capturing an image of a user with a camera (not shown) and using the captured image.

Therefore, as shown in FIG. 7(a), a display device (1) may output guide content for the user and may prompt the user to follow the actions of a coach (40) in the guide content. While the user follows the actions of the coach (40), the camera calibration method according to the present disclosure described with reference to FIG. 2 may be performed. In this case, the display device (1) may include a camera calibration device (10) or may be integrated with the camera calibration device (10).

According to the camera calibration method of FIG. 2, if the difference between the two-dimensional position estimate and the information obtained by transforming the three-dimensional position estimate into two dimensions is within the error range in S260, the final camera intrinsic parameters are confirmed, and the procedure is completed. However, if the difference between the two-dimensional position estimate and the information obtained by transforming the three-dimensional position estimate into two dimensions is outside the error range in S260, the procedure according to FIG. 2 may be repeated. Even with the adjustment of the camera intrinsic parameter (S280), the difference between the two pieces of information may not fall within the error range.

Although the camera calibration method according to FIG. 2 has been described as simply determining the difference between the two pieces of information, a modified embodiment may be considered where camera calibration is performed for multiple parts of an object or user or different areas of an image (e.g., center, right, left, etc.).

Therefore, to fully execute the camera calibration method according to FIG. 2, the display device (1) or the camera calibration device (10) may be configured to output guide content shown in FIG. 7(a) and then output guide content shown in FIG. 7 (b), which is different from the content shown in FIG. 7(a). The guide content in FIG. 7(b) is configured such that more of the body parts of the coach (40) are visible, compared to the content in FIG. 7(a). As a result, more of the body parts of the user may also be captured through the image. This may enable more efficient execution of the camera calibration.

As shown in FIGS. 6(a) - 6(b), the display device (1) or the camera calibration device (10) may be configured to output a user interface (50) on a display to inform that the camera calibration or the adjustment of the camera intrinsic parameters is completed.

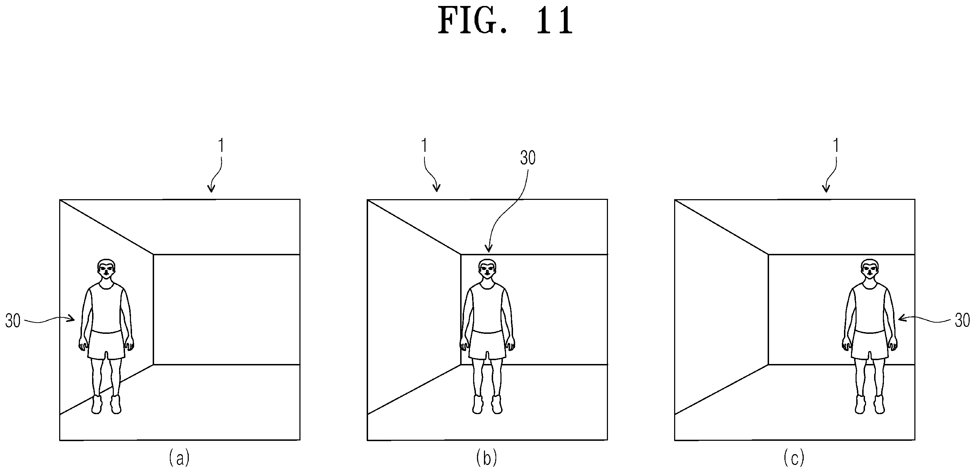

The camera calibration for multiple areas of the image will be described later with reference to FIGS. 11(a) - 11(c).

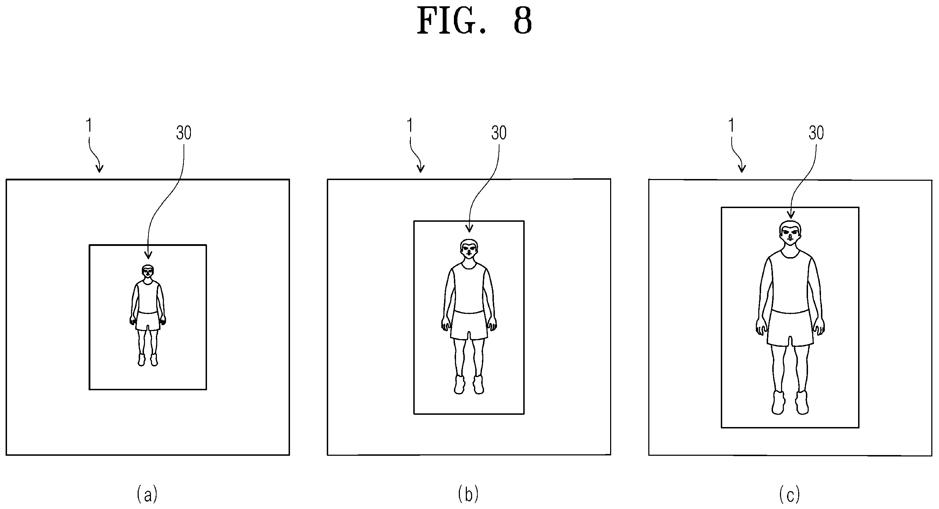

FIGS. 8(a) - 8(c) illustrate a third user scenario example for camera calibration according to the present disclosure.

Referring to FIGS. 8(a) - 8(c), it may be observed that an image obtained by capturing a user (30) is displayed on a display device (1) in different sizes. This may be explained by differentiating camera calibration based on the zoom level of a camera or camera calibration based on the distance between the user and the camera.

First, the camera calibration based on the camera zoom level will be described. When the camera provides a zoom function and is capable of capturing images at various zoom levels, camera intrinsic parameters may vary depending on the zoom level. Therefore, the camera calibration method according to FIG. 2 may be performed depending on the camera zoom level. In one embodiment, the camera calibration method according to FIG. 2 may be configured to be performed over the entire range of zoom levels supported by the camera. In another embodiment, the camera calibration method according to FIG. 2 may be configured to be performed at multiple discrete zoom levels within the full range of zoom levels supported by the camera.

Second, the camera calibration based on the distance between the user and the camera will be described. The distortion of the camera may vary between the center of the image and the surrounding areas of the image. Additionally, the camera calibration may vary depending on the distance from the camera to an object. Accordingly, the display device (1) or the camera calibration device (10) may output a user interface (not shown) on a display to guide the user (30) to position themselves closer to or farther away from the camera. The display device (1) or the camera calibration device (10) may adjust the size or position of the user (30) within the obtained image. In other words, the display device (1) or the camera calibration device (10) may be configured to perform the camera calibration method according to FIG. 2 based on the obtained image.

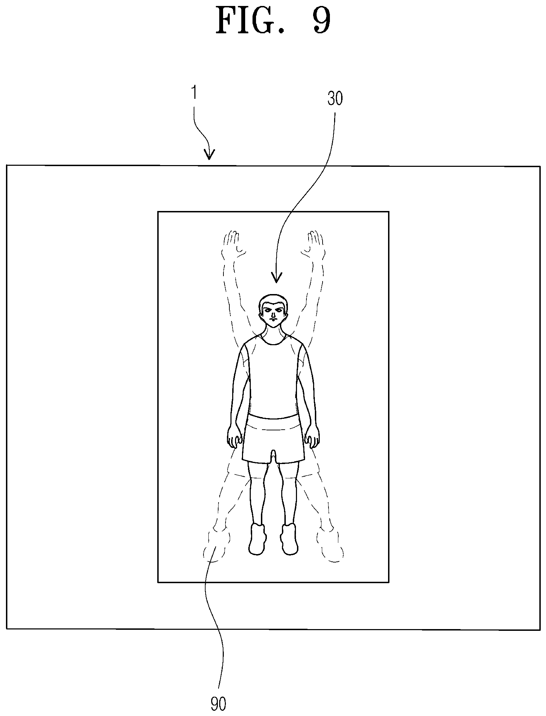

FIG. 9 illustrates a fourth user scenario example for camera calibration according to the present disclosure.

The display device (1) or the camera calibration device (10) may be configured to output a user interface (90) on a display to guide a position or posture for a user (30). The display device (1) or the camera calibration device (10) may be configured to perform the camera calibration method according to FIG. 2 based on an obtained image.

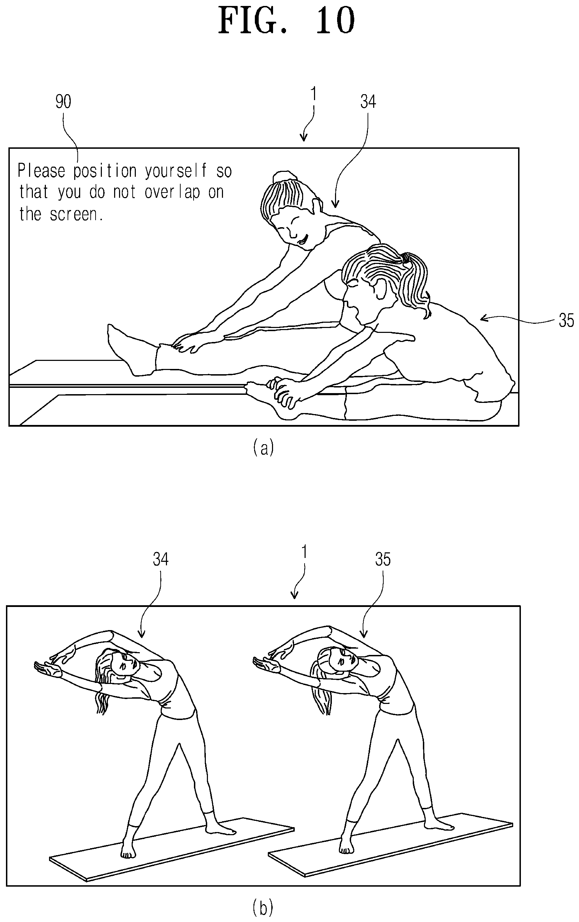

FIGS. 10(a) - 10(b) illustrate a fifth user scenario example for camera calibration according to the present disclosure.

FIGS. 10(a) - 10(b) are related to a case where multiple objects or users are captured in a single image.

FIG. 10(a) shows an image in which multiple users (34, 35) are captured, where the bodies of the multiple users (34, 35) overlap with each other. In this case, a display device (1) or a camera calibration device (10) may not be able to properly perform the camera calibration. To address this issue, the display device (1) or the camera calibration device (10) may be configured to output a user interface (90) on a display to guide positions or postures for the users (34, 35).

FIG. 10(b) shows an image in which the multiple users (34, 35) are captured, where the bodies of the multiple users (34, 35) do not overlap with each other. Specifically, FIG. 10(b) shows an image obtained after the positions or postures of the users (34, 35) are changed based on the user interface (90) that guides the positions or postures for the users (34, 35) as described in FIG. 10(a). The display device (1) or the camera calibration device (10) may be configured to perform the camera calibration method according to FIG. 2 based on the obtained image.

FIGS. 11(a) - 11(c) illustrate a sixth user scenario example for camera calibration according to the present disclosure.

Referring to FIGS. 11(a) - 11(c), it may be observed that the position of a user (30 differs in images captured and displayed on a display device (1). This is for performing camera calibration for a specific area of an image captured by a camera.

Although not shown, a user interface guiding the movement of the user (30) may be output on a display.

The display device (1) or a camera calibration device (10) may be configured to perform the camera calibration according to FIG. 2 for each image where the position of the user or object (30) differs as shown in FIGS. 11(a) - 11(c).

The embodiment according to FIGS. 11(a) - 11(c) may be used when an error occurs in the camera calibration according to FIG. 2 for the specific area of the image. For example, the embodiment may be used when the difference between the two-dimensional position information and the information obtained by transforming the three-dimensional position information into two dimensions does not converge within the error range as explained earlier. For instance, if an error occurs in the camera calibration according to FIG. 2 for the image shown in FIG. 11(a), the camera calibration according to FIG. 2 may be performed for the image shown in FIGS. 11(b) or 11(c). In this case, not only the movement of the user (30) but also a user interface guiding errors in the camera calibration may be output on the display.

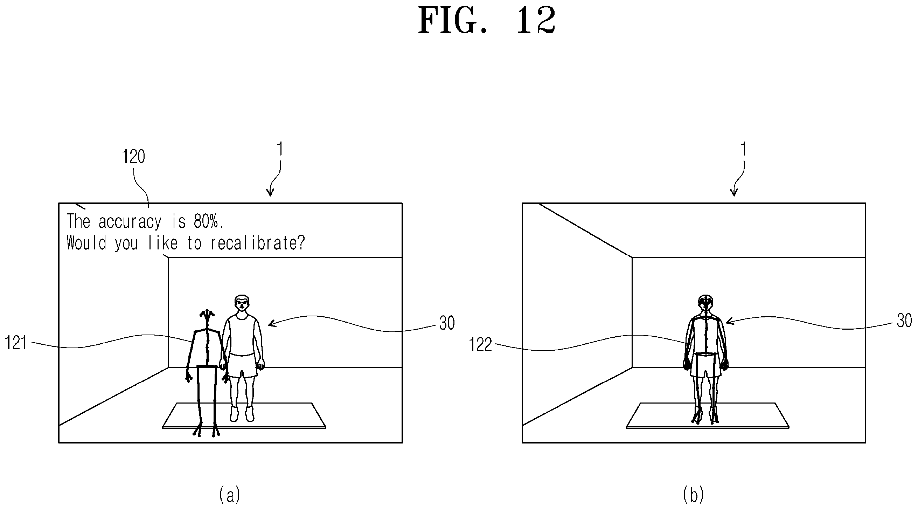

FIGS. 12(a) - 12(b) illustrate a seventh user scenario example for camera calibration according to the present disclosure.

FIG. 12(a) - 12(b) shows a result of displaying information (121) obtained by transforming a three-dimensional position estimate through camera calibration on an obtained image into two dimensions. In this case, a user interface (120) that shows accuracy feedback and guides readjustment of camera intrinsic parameters may be output on a display.

FIG. 12(b) shows a result of displaying information (122) obtained by transforming the three-dimensional position estimate through the camera calibration on the obtained image into two dimensions. Specifically, FIG. 12(b) represents the results after the camera calibration is performed again.

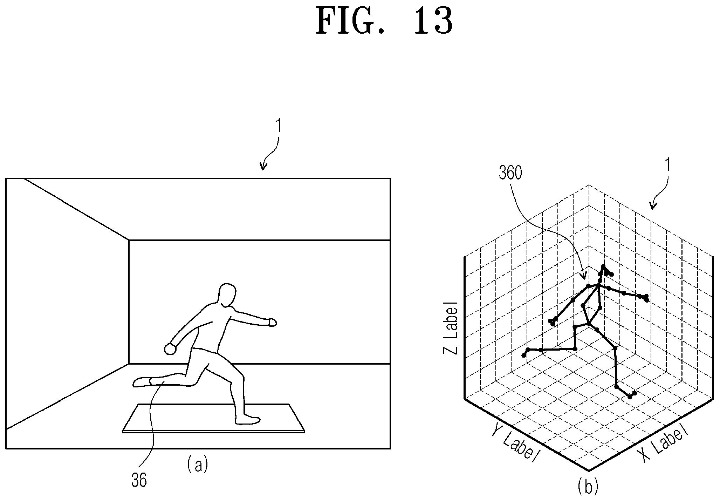

FIGS. 13(a) - 13(b) illustrate an image of an object (user) in a specific posture and three-dimensional joint position estimation results of the object (user) derived from the image.

FIG. 13(a) shows an image of a user (36). The image may be outputted on a display device (1).

FIG. 13(b) shows a result 360 of the three-dimensional position estimation for the user obtained based on FIG. 13(a).

The display device (1) or a camera calibration device (10) may be configured to output the three-dimensional position estimate by adjusting and estimating camera intrinsic parameters in real-time as shown in FIG. 13(b).

Displaying the three-dimensional position estimate based on the real-time adjustment or estimation of the camera intrinsic parameters may provide a user interface for comparing the accuracy of movements between the posture of the user and the posture of a coach in a guide content or displaying both the posture of the user and the posture of the coach simultaneously.

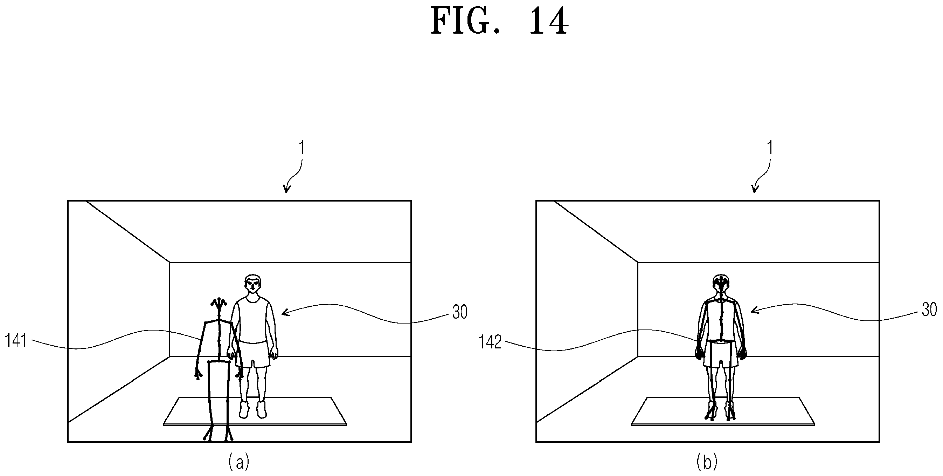

FIGS. 14(a) - 14(b) are diagrams for comparing three-dimensional estimation results obtained based on initial camera intrinsic parameters and three-dimensional estimation results obtained based on camera intrinsic parameters adjusted by camera calibration according to the present disclosure.

FIG. 14(a) shows an image and information (141) obtained by transforming the three-dimensional position estimate for an object based on initial camera intrinsic parameters into two dimensions, where the information 141 is overlaid on the image. In FIG. 14(b) shows an image and information (142) obtained by transforming the three-dimensional position estimate for an object based on camera intrinsic parameters, which are obtained through camera calibration according to the present disclosure, into two dimensions, where information (142) is overlaid on the image.

The three-dimensional position estimate (142) for the object is an estimate of the positions of joints of the object.

The better the alignment of the three-dimensional position estimate (142) with the object (30) in the image, the closer the adjusted or estimated camera intrinsic parameters are to the actual camera intrinsic parameters.

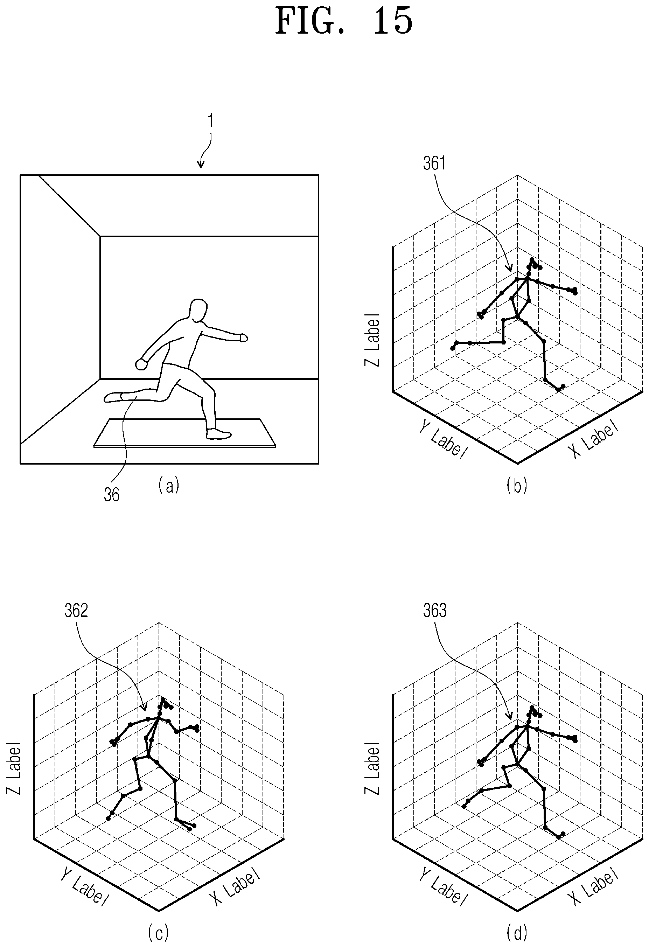

FIGS. 15(a) - 15(d) are diagrams for comparing three-dimensional estimation results obtained based on actual camera intrinsic parameters and initial camera intrinsic parameters and three-dimensional estimation results obtained based on camera intrinsic parameters adjusted through camera calibration according to the present disclosure.

FIG. 15(a) shows an image of an object (user) in a specific posture, FIG. 15(b) shows a three-dimensional position estimation result 361 of the object based on the actual camera intrinsic parameters, FIG. 15(c) shows a three-dimensional position estimation result (362) of the object based on the initial camera intrinsic parameters, and FIG. 15(d) shows a three-dimensional position estimation result (363) of the object based on the camera intrinsic parameters obtained through the camera calibration according to the present disclosure.

FIG. 16 illustrates a block diagram of a camera calibration device according to the present disclosure.

A camera calibration device (10) may include a memory (100) configured to store code for camera calibration.

The camera calibration device (10) may include a processor (101) configured to execute the code for performing operations for the camera calibration.

The operations for the camera calibration may include obtaining a two-dimensional position estimate for at least one pair of points of an object from an obtained image.

Additionally, the operations for the camera calibration may include obtaining a three-dimensional position estimate for the pair of points.

Additionally, the operations for the camera calibration may include obtaining two-dimensional transformation information for the obtained three-dimensional position estimate.

Additionally, the operations for the camera calibration may include calculating an error between the two-dimensional transformation information and the two-dimensional position estimate.

Additionally, the operations for the camera calibration may include adjusting camera calibration parameters based on the error or deciding the camera calibration parameters as final parameters.

Additionally, the three-dimensional position estimate may be obtained based on the two-dimensional position estimate and the camera calibration parameters.

The initial values for the camera calibration parameters are used, and the initial values may include a focal point value corresponding to the product of the width of the obtained image and a predetermined value and/or a principal point corresponding to the center of the obtained image.

Additionally, the operations for the camera calibration may include adjusting the camera calibration parameters when the error is greater than a threshold.

Additionally, the operations for the camera calibration may include deciding the camera calibration parameters as the final parameters when the error is smaller than the threshold.

Additionally, the operations for the camera calibration may include calculating the error by comparing the distance between the points of the pair of points or the position of the pair of points for the two-dimensional transformation information and the two-dimensional position estimate.

Additionally, the operations for the camera calibration may include outputting a user interface for guiding a posture for the object on a display when obtaining the two-dimensional position estimate for the pair of points is impossible or difficult.

Additionally, the operations for the camera calibration may include re-executing the code for the camera calibration upon detecting a connection with a new camera.

Additionally, the operations for the camera calibration may include executing the code for the camera calibration at multiple discrete zoom levels within a zoom level range supported by the camera.

Additionally, the operations for the camera calibration may include deciding the final parameters by executing the code for the camera calibration on a predetermined number of images.

Additionally or alternatively, the camera calibration device (10) may include a transmission/reception interface (102). The transmission/reception interface (102) may be configured to receive an image obtained from a camera. The transmission/reception interface (102) may be configured to transmit camera parameters obtained through camera calibration or the two-dimensional position estimate or three-dimensional position estimate of an object in the image obtained based on the parameters.

Additionally, the camera calibration device (10) may be configured to include a camera. The camera may capture an object or user and generate an image that includes the object or user.

Hereinabove, the camera calibration device (10) according to the present disclosure has been described with reference to FIG. 16. Even if not described with reference to FIG. 16, the camera calibration device (10) according to the present disclosure is capable of performing the operations according to FIGS. 2 to 15 described above.

In another aspect of the present disclosure, the above-described proposals or inventive operations may also be provided as code capable of being implemented, performed, or executed by a "computer" (i.e., a comprehensive concept including a system-on-chip (SoC) or a processor (or microprocessor), a computer-readable storage medium including the aforementioned code, or a computer program product. The scope of the present disclosure may be extended to the code, the computer-readable storage medium including the code, or the computer program product.

The exemplary embodiments of the present disclosure have been provided to enable those skilled in the art related to the present disclosure to implement and practice the present disclosure. Although the above description has been provided with reference to the exemplary embodiments of the present disclosure, it will be understood by those skilled in the art that the present disclosure as set forth in the claims below may be modified and varied in various ways. Therefore, the present disclosure is intended to provide the broadest scope consistent with the principles and novel features disclosed herein, rather than being limited to the embodiments disclosed herein.

**Claims**

1. A device for camera calibration, the device comprising:

   a memory configured to store code for the camera calibration; and
   a processor configured to execute the code for performing operations for the camera calibration,
   wherein the operations comprise:

   obtaining a two-dimensional position estimate for at least one pair of points of an object from an obtained image;
   obtaining a three-dimensional position estimate for the pair of points;
   obtaining two-dimensional transformation information for the obtained three-dimensional position estimate;
   determining an error between the two-dimensional transformation information and the two-dimensional position estimate; and
   based on the error, adjusting parameters for the camera calibration or deciding the parameters for the camera calibration as final parameters.

2. The device of claim 1, wherein the three-dimensional position estimate is obtained based on the two-dimensional position estimate and the parameters for the camera calibration.

3. The device of claim 2, wherein the parameters for the camera calibration that are adjusted or are decided as the final parameters comprise initial values for the camera calibration, and
   wherein the initial values comprise each of:

   a focal point value corresponding to a product of a width of the obtained image, and
   a predetermined value or a principal point corresponding to a center of the obtained image.

4. The device of claim 1, wherein the operations comprise adjusting the parameters for the camera calibration based on the error being greater than a threshold.

5. The device of claim 1, wherein the operations comprise deciding the parameters for the camera calibration as the final parameters based on the error being smaller than a threshold.

6. The device of claim 1, wherein the operations comprise determining the error by comparing a distance between points of the pair of points or a position of the pair of points for the two-dimensional transformation information and the two-dimensional position estimate.

7. The device of claim 1, wherein the operations comprise outputting a user interface for guiding a posture for the object on a display based on inability or difficulty in obtaining the two-dimensional position estimate for the pair of points.

8. The device of claim 1, where the operations comprise re-executing the code for the camera calibration based on detecting a connection with a new camera.

9. The device of claim 1, where the operations comprise executing the code for the camera calibration at a plurality of discrete zoom levels within a zoom level range supported by a camera.

10. The device of claim 1, where the operations comprise deciding the final parameters by executing the code for the camera calibration on a predetermined number of images.

11. A method for camera calibration, performed by a processor of a camera calibration device that includes a memory storing code for the camera calibration, the method comprising:

obtaining a two-dimensional position estimate for at least one pair of points of an object from an obtained image;
obtaining a three-dimensional position estimate for the pair of points;
obtaining two-dimensional transformation information for the obtained three-dimensional position estimate;
determining an error between the two-dimensional transformation information and the two-dimensional position estimate; and
based on the error, adjusting parameters for the camera calibration or deciding the parameters for the camera calibration as final parameters.

12. The method of claim 11, wherein the three-dimensional position estimate is obtained based on the two-dimensional position estimate and the parameters for the camera calibration.

13. The method of claim 12, wherein initial values of the parameters for the camera calibration are used, and where the initial values comprise a focal point value corresponding to a product of a width of the obtained image and a predetermined value or a principal point corresponding to a center of the obtained image.

14. The method of claim 11, wherein the method comprises:

adjusting the parameters for the camera calibration based on the error being greater than a threshold; or
deciding the parameters for the camera calibration as the final parameters based on the error being smaller than the threshold.

15. A non-transitory computer product storing code configured to be executed by a computer or processor performing operations for camera calibration,
wherein the operations for camera calibration comprise:

outputting a user interface for guiding a posture for a user on a display to obtain a user image;
obtaining at least one pair of points corresponding to the user from the obtained user image;
determining parameters for the camera calibration based on the least one pair of points; and
outputting three-dimensional position estimation results or two-dimensional transformation information based on the three-dimensional position estimation results, based on the pair of points and the determined parameters.

# FIG. 1

(a)

(b)

# FIG. 2

Start

↓

Image acquisition ~S210

↓

Estimate two-dimensional position ~S220

↓

Estimate three-dimensional position ~S230

↓

Transform three-dimensional position to two-dimensional position ~S240

↓

Calculate error between two-dimensional position estiamte and two-dimensional transformation information ~S250

↓

Is error between two-dimensional position estimate and two-dimensional transformation information within error range? S260

No →

Adjust camera intrinsic parameters ~S280

Camera intrinsic parameters

Yes ↓

Decide final parameters ~S270

# FIG. 3

(a)  (b)  (c)

# FIG. 4

(a)

(b)

# FIG. 5

# FIG. 6

(a)

(b)

EP 4 769 311 A1

# FIG. 7

(a)

40

(b)

40

# FIG. 8

(a)          (b)          (c)

# FIG. 9

# FIG. 10

(a)

(b)

# FIG. 11

(a)          (b)          (c)

EP 4 769 311 A1

# FIG. 12

The accuracy is 80%.
Would you like to recalibrate?

(a)

(b)

FIG. 13

# FIG. 14

(a)

(b)

# FIG. 15

# FIG. 16

EUROPEAN SEARCH REPORT

Application Number

EP 25 18 8223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/294020 A1 (CRIVELLA MICHELLE [US] ET AL) 12 October 2017 (2017-10-12) | 1,6-11 | INV. G06T7/73 |
| Y | * paragraphs [0003], [0008], [0019], [0049], [0051] * | 2-5, 12-14 | |
| Y | Richard Hartley ET AL: "Multiple View Geometry in Computer Vision" In: "Multiple View Geometry in Computer Vision - Second Edition", 1 January 2004 (2004-01-01), Cambridge University Press, New York, XP055328738, ISBN: 978-0-511-18618-9 pages i-xvi,1-655, * section 4.1.3, section 4.5,section 7.3, section 8.8 * | 2-5, 12-14 | |
| A | FAHIM GEORGE ET AL: "Single-View 3D reconstruction: A Survey of deep learning methods", COMPUTERS AND GRAPHICS., vol. 94, 1 February 2021 (2021-02-01), pages 164-190, XP093307374, GB ISSN: 0097-8493, DOI: 10.1016/j.cag.2020.12.004 Retrieved from the Internet: URL:https://pdf.sciencedirectassets.com/27 1576/1-s2.0-S0097849320X00094/1-s2.0-S0097 849320301849/main.pdf?hash=b889ed35c8ad5a5 24f0ad3a07c8716f828f37df729315e8ec3b7625a9 a66ef79&host=68042c943591013ac2b2430a89b27 0f6af2c76d8dfd086a07176afe7c76c2c61&pii=S0 097849320301849&tid=spdf-81923c3d-9f36-413 a-9326-8cb> * Section 1; figure 8 * | 1,11 | TECHNICAL FIELDS SEARCHED (IPC) G06T |

-/--

The present search report has been drawn up for all claims

| Place of search | Date of completion of the search | Examiner |
|---|---|---|
| Munich | 16 January 2026 | Capone, Luigino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 18 8223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KUN YAN ET AL: "Calibration of Camera Intrinsic Parameters Using A Single Image", ROBOTICS AND ARTIFICIAL INTELLIGENCE, ACM, 2 PENN PLAZA, SUITE 701NEW YORKNY10121-0701USA, 29 December 2017 (2017-12-29), pages 39-45, XP058384583, DOI: 10.1145/3175603.3175617 ISBN: 978-1-4503-5358-8 pag.40, section 1 pag.40, section 2.1 pag. 43, section 4.1 pag 43. section 4 equations: 3,17,27; * abstract * | 1-14 | |
| X | EP 4 168 989 B1 (MICROSOFT TECHNOLOGY LICENSING LLC [US]) 22 May 2024 (2024-05-22) * paragraphs [0089], [0114] - [0116], [0120], [0125] - [0127]; claim 1; figures 10-12,17 * | 15 | |
| A | US 2020/126297 A1 (TIAN YUAN [US] ET AL) 23 April 2020 (2020-04-23) * paragraphs [0008] - [0010], [0082] - [0085]; claims 1,8; figure 5 * | 15 | |

| | TECHNICAL FIELDS SEARCHED (IPC) |
|---|---|
| | |

The present search report has been drawn up for all claims

| Place of search | Date of completion of the search | Examiner |
|---|---|---|
| Munich | 16 January 2026 | Capone, Luigino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 25 18 8223

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 25 18 8223

The Search Division considers that the present European patent application does not comply with the requirements of unity of invention and relates to several inventions or groups of inventions, namely:

```
1. claims: 1-14

   Group I is directed towards calculating the parameters for
   the camera calibration based on the error determination for
   an object image.
                           ---

2. claim: 15

   Group II is directed towards obtaining a better user image
   for camera calibration.
                           ---
```

## ANNEX TO THE EUROPEAN SEARCH REPORT
## ON EUROPEAN PATENT APPLICATION NO.

EP 25 18 8223

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2026

| Patent document cited in search report | Publication date | Patent family member(s) | | Publication date |
|---|---|---|---|---|
| US 2017294020 A1 | 12-10-2017 | EP | 3229208 A1 | 11-10-2017 |
| | | US | 2017294020 A1 | 12-10-2017 |
| EP 4168989 B1 | 22-05-2024 | EP | 4168989 A1 | 26-04-2023 |
| | | US | 2021398318 A1 | 23-12-2021 |
| | | US | 2023050504 A1 | 16-02-2023 |
| | | WO | 2021257189 A1 | 23-12-2021 |
| US 2020126297 A1 | 23-04-2020 | CN | 111868788 A | 30-10-2020 |
| | | CN | 111986316 A | 24-11-2020 |
| | | US | 2020126297 A1 | 23-04-2020 |
| | | WO | 2020078292 A1 | 23-04-2020 |

EPO FORM P0459

For more details about this annex : see Official Journal of the European Patent Office, No. 12/82